# EUROPEAN PATENT APPLICATION

(11) **EP 1 991 013 A1**
(43) Date of publication of application: **12.11.2008**
(21) Application number: 07009244.0
(22) Date of filing: 08.05.2007
(51) Int. Cl.: H04Q 7/30, H04L 12/18, H04Q 7/22

(54) **Method and device for broadcast synchronization in a network**

(71) Applicant: Nokia Siemens Networks Oy, 02610 Espoo (FI)
(72) Inventor: Breuer, Volker, 16727 Bötzow (DE); Krause, Jörn, 12107 Berlin (DE); Lamprecht, Frank, 10439 Berlin (DE); Martos-Riano, Demian, 10115 Berlin (DE); Ulrich, Thomas, 67098 Bad Dürkheim (DE)
(74) Representative: Schober, Ralf Stefan

(57) **Abstract**

There is disclosed a method, computer program product and device for synchronizing the transmission of data packets in a broadcast system comprising a central node and at least two distributed nodes, the method comprising:
transmitting at least one data packet from said central node to said at least two distributed nodes, wherein said data packet is to be transmitted by said at least one distributed node at a transmission time defined by a time deferral; transmitting to said at least two distributed nodes a request to indicate if the time gap between the arrival time of at least one data packet and said transmission time is below a target time gap; decreasing said time deferral and restarting the method if no distributed node indicates within a predetermined time interval that said time gap is below said target time gap; and increasing said time deferral if at least one distributed node indicates within said predetermined time interval that said time gap is below said target time gap.

## Description

The invention relates to methods and devices for the synchronization of broadcasts in a network. It particularly relates to the synchronization with respect to air-transmission time of a plurality of distributed nodes in the network.

Single Frequency Network (SFN) transmission is seen as an advantageous method to transmit Multimedia Broadcast/Multicast Services (MBMS). An SFN is a broadcast network where several transmitters simultaneously transmit the same signal over the same frequency channel. It allows simultaneous reception and macro-diversity combining on the physical layer of the signal that is simultaneously transmitted over the air from different base stations and received within the cyclic prefix. The current requirement is that this combining shall be ensured within a time window of 33 microseconds.

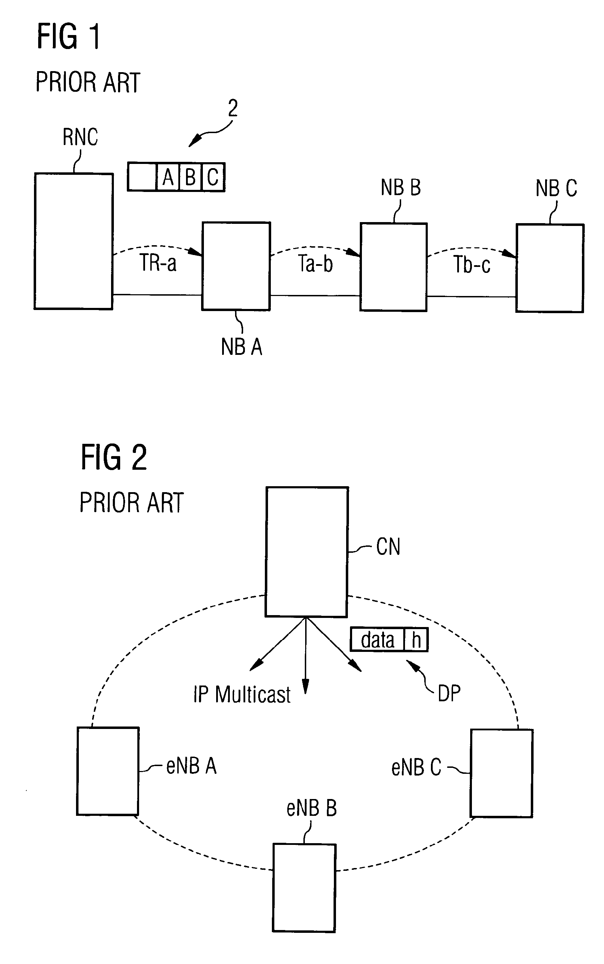

As an example, let's consider Node B's (NB's), the equivalent to base stations in e.g. a GSM mobile communications system, connected in a daisy chain fashion, as illustrated in fig. 1 (any other physical topology similar to a tree is also possible). Under the current approach, each NB is having its own data bearer and its own data flow. An improvement is that the Radio Network Controller (RNC) establishes a single data bearer for all NB's and uses Internet Protocol (IP) for the transport, with the optional capability that packets have specific information for each NB A, B, C (indicated as an A, B or C header part).

The challenge lies in the fact that the transport delays within the network, i.e. from the RNC to any NB, may endanger or even make it impossible for an NB, e.g. C in fig. 1, to transmit a data packet in time, simultaneously with the other NB's. This involves introducing the appropriate transmission delay at, in this example, NB A and NB B. In order to configure these delays correctly, the RNC needs to have information on the delays to be faced (indicated by Ta-b and Tb-c), or at least on the fact whether the most disadvantaged NB, in this example C, is capable of transmitting the packets in time.

In a Long Term Evolution (LTE) system it is expected that a single central node uses IP multicast to distribute MBMS data packets to so-called eNBs (evolved Node B's), with additional mechanisms to support simultaneous air-transmission, such as time stamping with an absolute clock that is also available at the eNBs, such as that one provided by the Global Positioning System (GPS), packet sequence number, and others, as part of a so-called data-content synchronization protocol.

The packets are distributed from this central node with IP multicast to all concerned eNBs, even country-wide, thus a high spread in transport delay shall be expected both to all eNBs and for a single eNB over time during the broadcast. For this reason, the central node shall also coordinate the air-transmission deferral time, which accommodates the highest transport delay at a certain time in the network. This deferral time is added to the time stamping of the data packets to indicate the air-transmission time.

The prior art does not provide means for adapting the transmission time and associated delays to delays in the transport network from the central node to distributed nodes initially and over time. Thus new methods and devices are necessary for ensuring and/or optimizing the synchronisation of the broadcast in single frequency networks with respect to the air-transmission time/time deferral of and possible transport delays experienced by the data packets.

### Summary of the invention

According to a first aspect a method is provided for synchronizing the transmission of data packets in a broadcast system comprising a central node and at least two distributed nodes, the method comprising:
- transmitting at least one data packet from said central node to said at least two distributed nodes, wherein said data packet is to be transmitted by said at least one distributed node at a transmission time defined by a time deferral;
- transmitting to said at least two distributed nodes a request to indicate if the time gap between the arrival time of at least one data packet and said transmission time is below a target time gap;
- decreasing said time deferral and restarting the method if no distributed node indicates within a pre-determined time interval that said time gap is below said target time gap; and
- increasing said time deferral if at least one distributed node indicates within said pre-determined time interval that said time gap is below said target time gap.

The method relates to a synchronization scheme for Single Frequency Network (SFN) broadcasts. In such broadcasts it is required that each of a plurality of distributed nodes transmits the same data packets provided by a central node within a certain time window, and at a transmission time defined by a time stamp within a data packet plus a pre-determined time deferral, or by an air-transmission time that is in turn defined by a generation or transmission time plus the time deferral. If delays are experienced in the transport network from the central node to one or more of the distributed nodes it is possible that some distributed nodes receive a packet too late for being transmitted within the target time window. The inventive method provides means for dealing with this situation, by providing a point-to-point feedback from the distributed nodes to the central node, in order to suitably adjust the time deferral to compensate the delays in the transport network.

The method can be used before an actual broadcast is started, e.g. a MBMS broadcast. In this case the data packet can be regarded as a "probe data packet" that does not need to be actually transmitted. It is only required that the distributed nodes indicate if they would be able to transmit the packet in time. An actual transmission is not required then. However, the method can as well be used continuously, i.e. during an actual broadcast, to fine-tune the time deferral in an on-the-fly manner. A combination of initial synchronization and continuous monitoring and adjustment of the time deferral is possible as well.

In case each distributed node has access to a synchronized time source, e.g. provided by GPS, it is possible to include in the data packets the actual air-transmission time. In this case the time deferral is the time deferral between transmission time or generation time of the data packet and the desired air-transmission time.

Time stamp and time deferral or desired air-transmission time can e.g. be included in the header of the data packets. The time deferral can also be provided to the distributed nodes by means independent from the data packets, e.g. on a separate control channel. In case an Iub interface is already present between central node and distributed nodes it can be re-used for requesting/receiving the indication.

According to an exemplary embodiment
- said data packet comprises a time stamp;
- said transmission time is defined by said time stamp plus said time deferral; and
- said time deferral is communicated to said at least two distributed nodes upon increase or decrease thereof.

According to an exemplary embodiment said data packet comprises an air-transmission time, and wherein said air-transmission time is defined by the generation or transmission time of said data packet at said central node plus said time deferral. Generation or transmission time are only examples for a reference time, in practice the time deferral can refer to any suitable time, for example a time in the interval between generation and transmission time.

According to an exemplary embodiment the method further comprises:
- providing a dedicated port in said central node for receiving said indications.

This can improve the reception of the indications, as network congestions may be avoided and/or suitable prioritizing can be applied for packets destined for the dedicated port.

According to an exemplary embodiment the method is restarted following said increasing of said time deferral. Even if a suitable time deferral has been determined (for example initially, before an actual broadcast), this embodiment allows providing constant monitoring and adjustment over time, in case the conditions relevant for any delay within the transport network change. As it is required to deal with any delay, but on the other hand a broadcast should always be made with the smallest suitable delay, this embodiment can ensure that only the minimal required delay is used over time. Minimizing the delay is particularly useful for real-time applications like the TV/audio transmission of a sports event.

According to an exemplary embodiment said central node comprises an output buffer for data packets to be transmitted to said at least two distributed nodes, and wherein increasing or decreasing said time deferral includes:
- simultaneously transmitting a plurality of data packets from said output buffer to said at least two distributed nodes, wherein the time deferral of each data packet is gradually increased or decreased until a target time deferral has been reached.

If a sufficiently high number of packets is available in the output buffer, the central node overcomes the situation of an insufficient (i.e. too low) time deferral by sending as many packets as needed simultaneously, each with an appropriately reconfigured air-transmission time, in such a way that the transport delay becomes compensated by the fact that packets are being sent earlier and therefore come on time to any complaining Node B. In other words, packets are being sent starting with a time deferral that is gradually increased up to the target time deferral.

According to an exemplary embodiment said request is transmitted as control information in a header of said at least one data packet.

According to an exemplary embodiment the method further comprises:
- transmitting to at least one of said at least two distributed nodes a request to indicate if the time gap between the arrival time of said at least one data packet and said transmission time is equal to or above said target time gap; and
- restarting said method if any requested distributed node does not provide said indication within a pre-determined time interval.

Most often the same distributed nodes (the most "distant" ones with respect to transport delay) will report back due to too late packet arrival. For this reason, the enhancement of this embodiment that improves the reliability of the inventive method is to request from a certain subset of distributed nodes (the "usual suspects" for having the highest transport delay times) an answer in any case. This can be achieved by maintaining a list of IP addresses or other identifiers identifying Node B's that are required to answer in any case. Also this can be made via Operation and Maintenance (O&M), by configuring that these distributed nodes shall always answer, even when the actual time gap is fairly sufficient. In the central node it is configured that from these distributed nodes an answer shall always be received, and otherwise the process is restarted.

According to an exemplary embodiment
- said indication from at least one distributed node includes the deviation of the time gap from the target time gap; and
- said increasing or decreasing of said time deferral is performed on the basis of said deviation.

This embodiment provides for a faster adjustment of the time deferral, as the deviation from the target time gap is directly taken into account for the amount the time deferral is increased (or decreased as well). When used as an initial synchronization this allows a faster converging of the scheme, as possible intermediate time deferrals that are not yet sufficient can be skipped.

According to another aspect of the present invention a method is provided for synchronizing the transmission of data packets in a broadcast system comprising a central node and at least two distributed nodes, the method comprising:
- receiving at least one data packet from said central node, wherein said data packet is to be transmitted at a transmission time defined by a time deferral or an air-transmission time;
- receiving from said central node a request to indicate if the time gap between the arrival time of said at least one data packet and said transmission time is below a target time gap;
- determining the time gap between the arrival time of said at least one data packet and said transmission time; and
- transmitting an indication that the time gap is below said target time gap to said central node if the time gap of said at least one data packet is below said target time gap.

The method relates to a synchronization scheme for Single Frequency Network (SFN) broadcasts. In such broadcasts it is required that each of a plurality of distributed nodes transmits the same data packets provided by a central node within a certain time window, and at an air-transmission time defined by a time deferral or by an air-transmission time. If delays are experienced in the transport network from the central node to one or more of the distributed nodes it is possible that some distributed nodes receive a packet too late for being transmitted within the target time window. The inventive method provides means for the distributed nodes to indicate a late arrival of data packets, in order to enable the central node to deal with this situation.

The method can be used before an actual broadcast is started, e.g. a MBMS broadcast. In this case the received data packet may be marked as a "probe data packet" that does not need to be actually transmitted. The indication that it is a probe data packet can be included in different ways, for example by adding a respective flag or other information to the header of a data packet. There may be other means for providing this indication of a probe data packet, like having probe data packets with a unique packet size.

It is only required that the distributed node indicates if it would be able to transmit the packet in time. An actual transmission is not required then. However, the method can as well be used continuously, i.e. during an actual broadcast, to fine-tune the time deferral in an on-the-fly manner. A combination of initial synchronization and continuous monitoring and adjustment of the time deferral is possible as well.

According to an exemplary embodiment
- said data packet comprises a time stamp;
- said transmission time is defined by said time stamp plus said time deferral; and
- said time deferral is received from said central node.

According to an exemplary embodiment said data packet comprises said air-transmission time.

According to an exemplary embodiment said indication is transmitted to a dedicated port of said central node. Transmitting to a dedicated port can improve the situation with respect to the load, i.e. the indication will less probably become "stuck" or delayed in the network when a dedicated port can be addressed for that purpose.

According to an exemplary embodiment said request is received as control information in a header of said at least one data packet.

According to an exemplary embodiment the method further comprises:
- receiving a request to indicate if the time gap between the arrival time of said at least one data packet and said transmission time is equal to or above said target time gap; and
- transmitting an indication that time gap is equal to or above said target time gap to said central node if said time gap is equal to or above said target time gap.

According to an exemplary embodiment the method further comprises:
- determining the deviation of the time gap from said target time gap; and
- including said deviation in said indication.

According to an exemplary embodiment a plurality of data packets is received from said central node, further comprising:
- transmitting an indication that the time gap is below said target time gap to said central node if the time gap of at least one data packet is below said target time gap or if the mean value of the time gaps of the plurality of data packets is below said target time gap.

In order to avoid an indication or notification, respectively, for each single received data packet, the disturbance notification can be generated every e.g. 10, 100 or 1000 data packets. In one embodiment an indication is transmitted in case that any of the plurality of data packets has a time gap below the target time gap. In another embodiment it is also possible to take a mean value of a plurality of time gaps and only report back to the central node if the mean value is below the target time gap.

According to yet another aspect of the present invention a computer program product is provided, comprising instructions stored on a computer-readable medium, for instructing a computer to perform the steps of the method described above, when run on said computer.

According to still another aspect of the present invention a device is provided for synchronizing the transmission of data packets in a broadcast system comprising said device and at least two distributed nodes, the device comprising:
- an interface adapted for transmitting data packets to said at least two distributed nodes;
- an interface adapted for receiving indications from said at least two distributed nodes;
- a timer component adapted for providing time stamps;
- a controller, adapted for transmitting at least one data packet to said at least two distributed nodes, wherein said data packet comprises is to be transmitted by said at least one distributed node at a transmission time defined by a time deferral, for transmitting to said at least two distributed nodes a request to indicate if the time gap between the arrival time of at least one data packet and said transmission time is below a target time gap, for decreasing said time deferral and restarting if no distributed node indicates within a pre-determined time interval that said time gap is below said target time gap, and increasing said time deferral if at least one distributed node indicates within said pre-determined time interval that said time gap is below said target time gap.

It is to be noted that the interfaces for transmitting data packets or for receiving indications, respectively, can be implemented as independent interfaces, but also as a shared interface. For example, it is possible to use an existing Iub interface between central node and distributed nodes for this purpose.

The timer component must be capable of providing time stamps, e.g. in order to include in a data packet the time of generation or transmission, or any other reference time point. The timer component can also be used to only determine the time of generation/transmission, without including it in the data packet. The controller can then include a desired air-transmission time in the data packet, or otherwise indicate it to the distributed node. However, in every case the air-transmission time is defined by a "start time" (which can be the generation or transmission time) plus a time deferral. The time deferral can be communicated to the distributed nodes, or it can (at least initially) be pre-fixed, i.e. known within the distributed nodes.

According to an exemplary embodiment said controller is adapted for including a time stamp in said data packet,
wherein said transmission time is defined by said time stamp plus said time deferral, and for communicating said time deferral to said at least two distributed nodes upon increase or decrease thereof.

According to an exemplary embodiment said controller is adapted for including an air-transmission time in said data packet, wherein said air-transmission time is defined by the generation or transmission time, determined by said timer component, of said data packet at said central node plus said time deferral.

According to an exemplary embodiment said interface for receiving indications comprises a dedicated port for receiving said indications. Providing a port specifically for the indications or disturbance notifications, respectively, can help to avoid that packets get "stuck" or delayed within the transport network in case of network congestion. It can also allow the provision of suitable prioritizing, because the indications may need to be given a higher priority than other packets.

According to an exemplary embodiment the controller is adapted for restarting following said increasing of said time deferral.

According to an exemplary embodiment the device further comprises:
- an output buffer for data packets to be transmitted to said at least two distributed nodes;
wherein said controller is adapted for performing said increasing or decreasing of said time deferral by simultaneously transmitting a plurality of data packets from said output buffer to said at least two distributed nodes, wherein the time deferral of each data packet is gradually increased or decreased until a target time deferral has been reached.

According to an exemplary embodiment said controller is adapted to transmit said request as control information in a header of said at least one data packet.

According to an exemplary embodiment said controller is adapted for transmitting to at least one of said at least two distributed nodes a request to indicate if the time gap between the arrival time of said at least one data packet and said transmission time is equal to or above said target time gap, and for restarting if any requested distributed node does not provide said indication within a pre-determined time interval.

According to an exemplary embodiment said indication includes the deviation of the time gap from said target time gap, and
wherein said controller is adapted to perform said increasing or decreasing of the time deferral based on said deviation.

According to a further aspect of the present invention a device is provided for synchronizing the transmission of data packets in a broadcast system comprising a central node and said device, the device comprising:
- an interface adapted for receiving data packets from said central node;
- an interface adapted for transmitting indications to said central node;
- a timer component;
- a controller adapted for receiving at least one data packet from said central node, wherein said data packet is to be transmitted by said device at a transmission time defined by a time deferral or an air-transmission time, receiving from said central node a request to indicate if the time gap between the arrival time of said at least one data packet and said transmission time is below a target time gap, determining the time gap between the arrival time of said at least one data packet and said transmission time, and transmitting an indication that the time gap is below said target time gap to said central node if the time gap of said at least one data packet is below said target time gap.

According to an exemplary embodiment said interface for transmitting indications is adapted for transmitting said indications to a dedicated port of said central node.

According to an exemplary embodiment said request is received as control information in a header of said at least one data packet.

According to an exemplary embodiment said controller is adapted for receiving a request to indicate if the time gap between the arrival time of said at least one data packet and said transmission time is equal to or above said target time gap, and for transmitting an indication that time gap is equal to or above said target time gap to said central node if said time gap is equal to or above said target time gap.

This request can be received separately from or together with said request to indicate if the time gap is below the target time gap. The intention is that some distributed nodes should always provide an indication or notification, in order to ensure that no packet loss has occurred.

According to an exemplary embodiment said controller is adapted for determining the deviation of the time gap from said target time gap, and for including said deviation in said indication.

According to an exemplary embodiment a plurality of data packets is received from said central node, and said controller is adapted for transmitting an indication that the time gap is below said target time gap to said central node if the time gap of at least one data packet is below said target time gap or if the mean value of the time gaps of each of the plurality of data packets is below said target time gap.

### Brief description of the drawings

The invention can be more fully understood by the following detailed description of exemplary embodiments, when also referring to the drawings which are provided in an exemplary manner only and are not intended to limit the invention to any particular embodiment illustrated therein. In the drawings
Fig. 1 illustrates the prior art situation in a broadcast network;
Fig. 2 illustrates the prior art situation in another broadcast network;
Fig. 3 depicts an embodiment of the present invention;
Fig. 4 is a flow diagram of an embodiment of the method of the invention;
Fig. 5 is a flow diagram of another embodiment of the method of the invention; and
Fig. 6 illustrates parts of a system according to the invention.

### Detailed description of the invention

In fig. 1 the prior art situation of a broadcast network is illustrated. There is one central node, in this case a Radio Network Controller (RNC), which is connected to three so-called Node B's NB A, NB B and NB C. The connection is made in a daisy chain fashion here, although other topologies similar to a tree are possible. Node B's are the equivalent to base stations in a GSM mobile communications system. The RNC establishes a single data bearer for all NB's and uses Internet Protocol (IP) for the transport, as the figure illustrates. It is an optional feature that data packets DP carry node-specific information for each NB A, B, C (indicated as an A, B or C header part). It is assumed that the RNC transmits data packets DP to the nodes NB A, NB B and NB C in order to be transmitted from the nodes within a certain time window.

The problem with this prior art arrangement arises from the fact that the transport delays within the network, i.e. from the RNC to any NB, may endanger or even make it impossible for an NB, e.g. C in fig. 1, to transmit the packet in time, simultaneously with the other NB's. Each packet is to be transmitted at the correct transmission time, e.g. via a wireless network (not shown). In order to configure the transmission time correctly, the RNC needs to have information on the delays to be faced (indicated by TR-a, Ta-b and Tb-c), or at least on the fact whether the most disadvantaged NB, in this example C, is capable of transmitting the packets in time. The prior art does not provide means for adjusting the transmission time (which may also be defined by a time stamp plus a pre-determined time deferral) to delays in the transport network initially and over time.

It is possible to determine a somehow "high" time deferral in order to deal with a worst case consideration in this example, although this fixed time deferral cannot cope with changing conditions in the network. Also, as the defer time affects the "topicality" or the "actuality" of the service (let's think of the TV transmission of a sports event), it is desirable to minimize it, which is in contrast to avoiding transmission errors due to late packet arrival by increasing the time deferral.

Fig. 2 shows another example of a similar prior art arrangement. In a so-called Long Term Evolution (LTE) system it is expected that a single central node CN uses IP multicast to distribute MBMS data packets DP to so-called eNBs (evolved Node B's) eNB A, eNB B, eNB C, with additional mechanisms to support simultaneous air-transmission, such as time stamping with an absolute clock that is also available at the eNBs, such as that one provided by the Global Positioning System (GPS), packet sequence number, and others, as part of a so-called data-content synchronization protocol.

The packets are distributed from this central node CN with IP multicast to all concerned eNBs, possibly even country-wide, thus a high spread in transport delay shall be expected both to all eNBs and for a single eNB over time during the broadcast. For this reason, the central node shall also coordinate the air-transmission deferral time, which accommodates the highest transport delay at a certain time in the network. This deferral time is added to the time stamping of the data packets to indicate the air-transmission time.

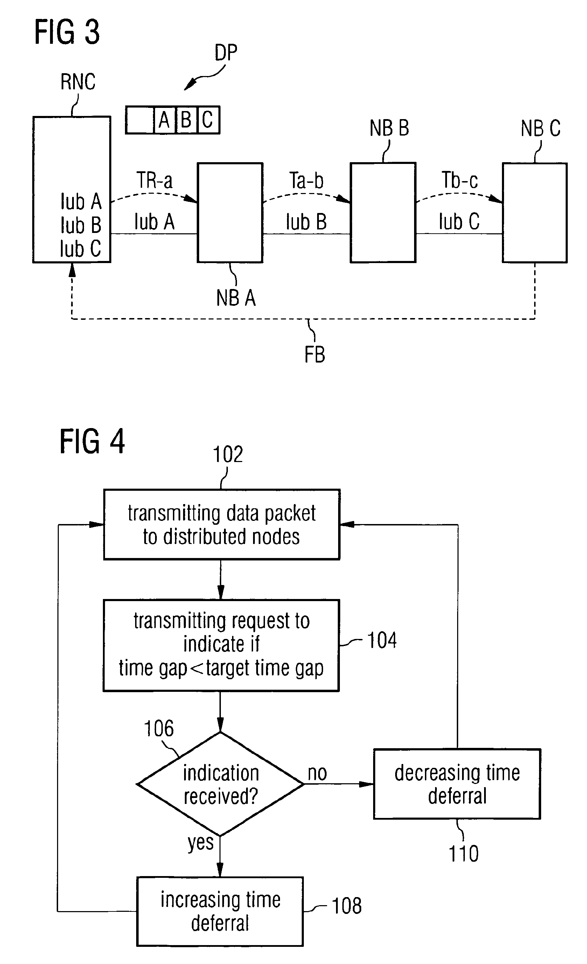

Fig. 3 shows an arrangement according to an embodiment of the present invention. The basic arrangement is similar to that depicted in fig. 1. There is one RNC, which is connected to three distributed nodes NB A, NB B and NB C. The connection is made in a daisy chain fashion here. The RNC has a single data bearer for all NB's and uses Internet Protocol (IP) for the transport, Iub A, Iub B and Iub C. Optionally data packets DP carry node-specific information for each NB A, B, C (indicated as an A, B or C sections in the header part). It is assumed that the RNC transmits data packets DP to the nodes NB A, NB B and NB C in order to be transmitted from the nodes within a certain time window.

According to the invention a point-to-point feedback is provided, indicated by FB here. This feedback connection can be implemented independent from the Iub interface, however, the Iub interface can also be re-used for this purpose. In this example the RNC has to each NB an Iub interface, which can be re-used in order to establish a feedback control channel regarding the arrival time of the packet to be sent, or else the time remaining before being sent on air, or that the data packet has arrived too late. This additional control channel reporting on the data arrival is associated to the multicast data channel and is a necessary extension of the Iub, and main subject of the invention.

The RNC receives regularly or based on a configured way (e.g. packet is available less than x ms before time of air transmission) point-to-point feedback from the Node B's. That is, the RNC at least receives indications from nodes indicating that the time gap between arrival time of a packet and the desired transmission time is below a per-determined time gap. As only the farthest Node B's are relevant for this signaling, the RNC may selectively disable this feedback from those Node B's being "closer", e.g. from NB A.

According to the invention, synchronous transmission is scheduled by the RNC and is conditioned by the "farthest" NB, i.e. the one with highest transport delay. In UTRAN, the RNC is capable to calculate the appropriate CFN (Channel Frame Number) and offset to be taken into account in each cell of the different NB's for a synchronized air transmission. Another possible implementation would be having an absolute clock reference available in these nodes (e.g. GPS), and indicating the time for air-transmission in the IP multicasted data packet.

Fig. 4 is a flow diagram showing an exemplary embodiment of the method of the invention. In step 102 a central node starts with transmitting at least one data packet to at least two distributed nodes. In step 104 a request is transmitted to the nodes to indicate if the time gap between packet arrival and the desired transmission time is below a target time gap. In advanced embodiments this request is only transmitted to a sub-set of all nodes, in case there are certain nodes which are known not to experience late packet arrival. In further advanced embodiments another sub-set of nodes is requested to always provide a response, i.e. even if the time gap is equal to or above the target time gap.

It is to be noted that the transmission time will in every case be defined by a time deferral. Either the transmission time can be derived by adding the time deferral to a time stamp included in the data packet, or an air-transmission time is explicitly communicated to the nodes (e.g. in the header of the data packet), wherein this air-transmission time is in turn defined by the generation time or transmission time (or any other reference time) plus the time deferral.

In step 106 it is checked if an indication is received from any node that the time gap is below the target time gap. This check is (not shown) connected with a pre-determined time interval, i.e. if no indication is received within the time interval it is concluded that all nodes have received the data packet in time. It may happen that an indication gets lost or delayed beyond this time interval. Therefore, in the above mentioned further advanced embodiments, a sub-set of nodes is requested to always answer within the time interval. If these "usual suspects" do not answer in time, the process is restarted. This can deal with the occurrence of packet loss or high delay in transmission of the indications.

If an indication is received that the time gap in any node is below the target time gap, the time deferral is increased in step 108, in order to compensate for the delay in packet reception that has been experienced. The process with the newly set time deferral is continued with step 102. If no indication is received within the time interval, the time deferral is increased in step 110, and the process continues with step 102.

When the central node, e.g. the RNC, realizes through the inventive scheme that the farthest Node B's are starting to receive or are receiving the data packets too late, the following strategies according to the invention can be used to cope with the situation:
- If a sufficiently high number of packets are available in the output buffer, the RNC overcomes the situation by sending as many as needed simultaneously, each with an appropriately reconfigured air-transmission time, in such a way that the transport delay becomes compensated by the fact that packets are being sent earlier and therefore come on time to the complaining NB.
- If the output buffer capacity is insufficient to compensate the requested deferral time, the consequence is that the RNC will re-schedule the air-transmission time with the additional delay necessary to compensate for the delay time necessary in the transport network. As a consequence, the RNC will leave gaps in the air transmission, i.e., free resources. The RNC can schedule other transmissions there instead.

When the RNC needs to reconfigure the air-transmission time, it reconfigures the parameters on which the air-transmission time depends for each Node B. In order to achieve this it can modify already existing parameters as described in TS 25.402 (ToW, CFN, SFN, etc.). In addition, if the RNC indicates the frequency used for sending packets (e.g. "I am sending packets to this IP multicast address every 80 ms"), and uses a marker to indicate if a packet is the last of a packet burst (in order to distinguish between lost packets and pauses in the network transmission), it is very easy for each NB to detect a packet loss or failed reception/handling. The NB can then request that the packet is re-sent. This re-sending makes sense in case the NB is able to transmit it on time over the air even when it gets lost once. This can be achieved with large buffering both in the NB and the RNC.

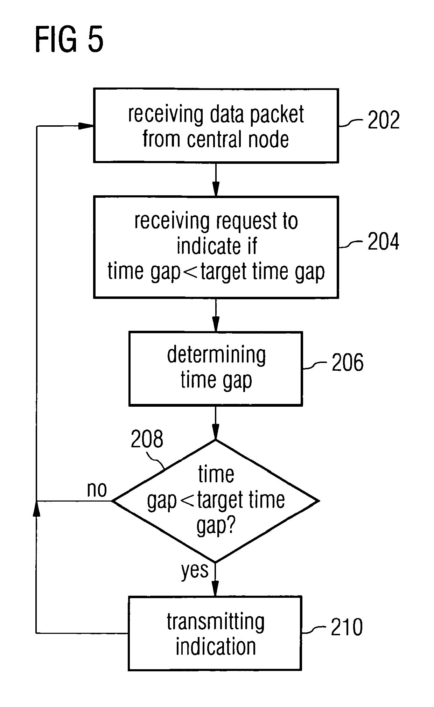

Fig. 5 is a flow diagram illustrating the inventive method as performed in one of the distributed nodes. In step 202 a data packet is received from the central node. The data packet is to be transmitted by the respective node at a transmission time defined as already described above. This data packet can, in certain embodiments of the invention, be "marked" as a probe data packet, for performing an initial "survey" like adjustment procedure. That is, the probe data packet is not necessarily to be actually transmitted. It is only required to check if the transmission could have been performed in time (taking into account the desired transmission time and all involved delays, including the time required by the node to process for transmission).

In step 204 a request is received, the request instructing to indicate if the time gap between the desired transmission time and the arrival time is below a pre-determined target time gap. The target time gap will inter alia take into account any time required to process the data packet in the node, in order to perform the transmission thereof, and probably a certain "safety" offset. It is to be noted that the target time gap can also be communicated by the central node, i.e. it is not fixed but can be adjusted. It does also not have to have the same value for each node, but can be node-specific. It is to be noted that the request to provide an indication can be separate from the data packet, but it can also be included within the data packet, e.g. as control data included in the header thereof.

In step 206 the actual time gap is determined in the node. In case the time gap is not below the target time gap, in step 208, the process restarts with step 202. Otherwise, when the time gap is below the target time gap in step 208, an indication is transmitted to the central node to indicate this shortfall. The process then also restarts with step 202.

In advanced embodiments the request to provide an indication can include the request (or an independent additional request is received) to indicate also if the time gap is equal to or above the target time gap. In other words, a response or indication is requested under all circumstances. In this case step 208 will include an additional branch (not shown),
wherein an indication is sent when the time gap is equal to or above the target time gap.

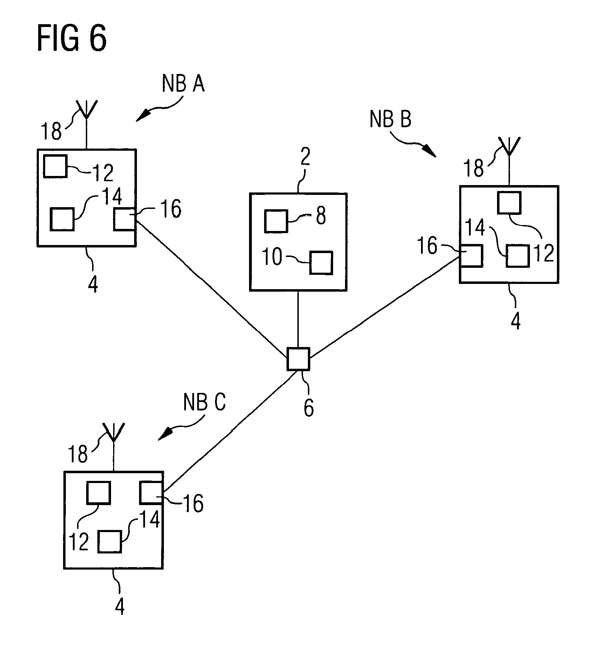

In fig. 6 a system according to the invention is shown. It comprises a central node 2 and three distributed nodes 4, additionally indicated by NB A, NB B and NB C. Via an interface 6 the central node is connected with the distributed nodes 4. Interface 6 can for example be an existing Iub interface that is enhanced according to the invention. Each node 4 comprises a corresponding interface 16 connected with the central node's interface 6. A wireless interface 18 is part of each node 4, for example adapted for a GSM or UMTS communications network. The wireless interface 18 is used for the synchronized broadcast, e.g. for transmitting MBMS.

The central node comprises a timer component 10, which is capable of providing time stamps, or generally, for enabling the central node 2 to associate data packets with a generation, transmission or intended air-transmission time. The central node 2 is controlled via a controller 8 that is adapted for performing the method of the invention.

In turn each node 4 comprises a timer component 14, enabling the node 4 to handle particularly the intended air-transmission time of a data packet. In other words, the timer component 14 enables the node to determine when to transmit a received data packet. The timer component 14 can for example be implemented as a GPS module, or is part of a synchronized timing circuit shared by all nodes. Each node 4 is controlled by a controller 12 that is adapted for performing the method of the invention.

The proposed invention has no particular topology restrictions, it is adapted to the use of IP Multicast for the data transport bearer, and it allows reusing the Iub for the establishment of the proposed Iub transport control channels. It is suitable to support the inventive scheme before the transmission over the air starts, as well as during an ongoing transmission.

According to another option of the invention the central node provides a dedicated IP port for the indications or disturbance notifications, respectively, such as "too late arrival of packets", that a distributed node can indicate at any time. In some embodiments of the invention this notification does in addition indicate the gap time to be compensated by an increase of the deferral time. The gap time is equal to the time difference between the required air-transmission time and the actual time of arrival at the network interface, adding to it the time of advance that the node requires in order to process for air-transmission. In this manner, the central node will know it shall increase the deferral transmission time at least by this value.

It is to be noted that the desired transmission time of a data packet may be determined from a time stamp associated to each packet, adding to it the time deferral. If the IP multicast does not beat a time stamp, it will bear some other kind of time information that will allow associating it to an absolute time stamp identically understood in all distributed nodes.

An increase of the transmission time deferral could result in an interruption of the service, and this will be perceived by the user if not handled properly. Therefore, in advanced embodiments the central node is capable of making the transition to an increased time deferral smooth, if it can properly interact with the application layer, or if it has at least a buffered state of the packet flow. A possible solution is that it simultaneously sends the packets, each with a step-increased deferral time (as they have to be air-transmitted sequentially), until it manages to be sending the data packets with the updated and targeted deferral time.

In other words, the central node applies the following techniques to defer packets properly until all nodes are capable of transmitting them:
- If a sufficiently high number of packets are available in the output buffer, the central node overcomes the situation by sending as many as needed simultaneously, with a step increased deferral time, until it is sending with the targeted deferral time.
- If the output buffer capacity is insufficient to compensate the requested deferral time, the application layer is notified about the deferral time that is going to be introduced, the application layer takes measures accordingly in order to smooth the transition time.
- In the worst case, the central node increases the deferral transmission time without applying "smoothing" methods; as a consequence the transmission is temporarily interrupted and the radio resources are free during the transition time (there is in principle no need, at the side of the nodes, to generate empty frames).

An improved solution is that the central node is capable of evaluating the most appropriate deferral time in advance, before a service actually starts. For this purpose, it requests (e.g. as control information in the header of the data packet distributed via IP multicast) from the distributed nodes to indicate whether the time gap (time gap between the latest time of arrival possible and the actual arrival time of the packet) is below a certain provided value GT. If no node responds, the request is repeated with a reduced GT value. This is repeated until one or more nodes indicate, e.g. via the dedicated disturbance notification port, that they have received that packet with a time gap below the proposed value.

The central node may then use a deferral time with a GT value that hasn't caused a disturbance notification, i.e. above the value that triggered the notification. This GT value can be additionally set as preferred GT value. This quickly converging algorithm can be used shortly before the start of the service and the transmission of the actual data, in order to establish the optimum deferral time at the central node, in a way that resembles that of conducting a survey. It can actually be applied in parallel to the ongoing service, in order to re-evaluate the correctness of the GT value under use.

Note that this method cannot cope with packet loss, but survey repetition provides a certain level of confidence in the results. Most often the same nodes will report back at the disturbance port. For this reason, an optional enhancement of the method that improves its reliability is to request from a certain subset of nodes (the usual suspects for having the highest transport delay times) an answer in any case. This can be part of the survey mechanism, which includes a list of single IP addresses identifying the nodes that shall answer anyway, or else via O&M, where it is configured that these nodes shall always answer, even when the GT is fairly sufficient. That is, it is configured in the central node that from these nodes an answer shall always be received, otherwise the survey procedure is repeated, assuming that the packets did not reach.

As the transport time delay strongly varies, the nodes may report an actual time gap below the preferred GT value before actually starting to receive packets too late. For this reason, the disturbance notification may distinguish following situations:
- Packets arriving with a time gap below the GT value (optional quantitative difference value between GT and actual value is a possible additional information, GTdv).
- Packets arriving too late for transmission.
This information may be evaluated and included in a statistical way (maximum, minimum and mean values of the GTdv).

It is helpful for the nodes to easily identify both delay jitters in the network as well as packet losses. For this purpose, the central node may indicate the frequency at which data packets are multicasted (e.g. "packets are sent every 80 ms"), and whether a packet is actually the last of a burst (in order to distinguish between packet loss or non-transmission periods). If this is supported, the node can quickly react to packet losses. In this conjunction the option that the central node provides an IP port for disturbance notifications can be reused for the report of packets not received (as the data packets will have a sequence number), and having them being re-sent. If the deferral time is sufficiently high (e.g. more than 1.5 times the maximum round trip delay + time interval between consecutive packets), it is possible to partially compensate transport data packet loss or corruption.

The evaluation of the GT value that needs to be compensated for MBMS purposes relies on a mechanism that can be used for a more accurate investigation of the existing transport delays, at least to those nodes that rely on an absolute clock. The measurement relies on the possibility to use the absolute time stamp at the central node (or a common time stamp that can be associated to an absolute clock at the distributed node) and the distributed node. The transport delay can be accurately calculated at the node. This calculation can be reported to the central node at the disturbance notification port. Alternatively, the central node can conduct a survey and obtain a statistical evaluation by asking a certain sub-set of nodes (e.g. those having a calculated transport time in a certain time window) to provide an answer.

## Claims

1. Method for synchronizing the transmission of data packets in a broadcast system comprising a central node and at least two distributed nodes, the method comprising:
- transmitting at least one data packet from said central node to said at least two distributed nodes, wherein said data packet is to be transmitted by said at least one distributed node at a transmission time defined by a time deferral;
- transmitting to said at least two distributed nodes a request to indicate if the time gap between the arrival time of at least one data packet and said transmission time is below a target time gap;
- decreasing said time deferral and restarting the method if no distributed node indicates within a pre-determined time interval that said time gap is below said target time gap; and
- increasing said time deferral if at least one distributed node indicates within said pre-determined time interval that said time gap is below said target time gap.

2. Method according to claim 1, wherein
- said data packet comprises a time stamp;
- said transmission time is defined by said time stamp plus said time deferral; and
- said time deferral is communicated to said at least two distributed nodes upon increase or decrease thereof.

3. Method according to claim 1, wherein said data packet comprises an air-transmission time, and wherein said air-transmission time is defined by the generation or transmission time of said data packet at said central node plus said time deferral.

4. Method according to anyone of claims 1 to 3, further comprising:
- providing a dedicated port in said central node for receiving said indications.

5. Method according to anyone of claims 1 to 4, wherein the method is restarted following said increasing of said time deferral.

6. Method according to anyone of claims 1 to 5, wherein said central node comprises an output buffer for data packets to be transmitted to said at least two distributed nodes, and wherein increasing or decreasing said time deferral includes:
- simultaneously transmitting a plurality of data packets from said output buffer to said at least two distributed nodes, wherein the time deferral of each data packet is gradually increased or decreased until a target time deferral has been reached.

7. Method according to anyone of claims 1 to 6, further comprising:
- transmitting to at least one of said at least two distributed nodes a request to indicate if the time gap between the arrival time of said at least one data packet and said transmission time is equal to or above said target time gap; and
- restarting said method if any requested node does not provide said indication within a pre-determined time interval.

8. Method according to anyone of claims 1 to 7, wherein
- said indication from at least one distributed node includes the deviation of the time gap from the target time gap; and
- said increasing or decreasing of said time deferral is performed on the basis of said deviation.

9. Method for synchronizing the transmission of data packets in a broadcast system comprising a central node and at least two distributed nodes, the method comprising:
- receiving at least one data packet from said central node, wherein said data packet is to be transmitted at a transmission time defined by a time deferral or an air-transmission time;
- receiving from said central node a request to indicate if the time gap between the arrival time of said at least one data packet and said transmission time is below a target time gap;
- determining the time gap between the arrival time of said at least one data packet and said transmission time; and
- transmitting an indication that the time gap is below said target time gap to said central node if the time gap of said at least one data packet is below said target time gap.

10. Method according to claim 9, wherein
- said data packet comprises a time stamp;
- said transmission time is defined by said time stamp plus said time deferral; and
- said time deferral is received from said central node.

11. Method according to claim 9, wherein said data packet comprises said air-transmission time.

12. Method according to anyone of claims 9 to 11, wherein said indication is transmitted to a dedicated port of said central node.

13. Method according to anyone of claims 9 to 12, further comprising:
- receiving a request to indicate if the time gap between the arrival time of said at least one data packet and said transmission time is equal to or above said target time gap; and
- transmitting an indication that time gap is equal to or above said target time gap to said central node if said time gap is equal to or above said target time gap.

14. Method according to anyone of claims 9 to 12, further comprising:
- determining the deviation of the time gap from said target time gap; and
- including said deviation in said indication.

15. Computer program product, comprising instructions stored on a computer-readable medium, for instructing a computer to perform the method of anyone of claims 1 to 14, when run on said computer.

16. Device for synchronizing the transmission of data packets in a broadcast system comprising said device and at least two distributed nodes, the device comprising:
- an interface adapted for transmitting data packets to said at least two distributed nodes;
- an interface adapted for receiving indications from said at least two distributed nodes;
- a timer component adapted for providing time stamps;
- a controller, adapted for transmitting at least one data packet to said at least two distributed nodes,
wherein said data packet comprises is to be transmitted by said at least one distributed node at a transmission time defined by a time deferral, for transmitting to said at least two distributed nodes a request to indicate if the time gap between the arrival time of at least one data packet and said transmission time is below a target time gap, for decreasing said time deferral and restarting if no distributed node indicates within a pre-determined time interval that said time gap is below said target time gap, and increasing said time deferral if at least one distributed node indicates within said pre-determined time interval that said time gap is below said target time gap.

17. Device according to claim 16, wherein said controller is adapted for including a time stamp in said data packet,
wherein said transmission time is defined by said time stamp plus said time deferral, and for communicating said time deferral to said at least two distributed nodes upon increase or decrease thereof.

18. Device according to claim 16, wherein said controller is adapted for including an air-transmission time in said data packet, wherein said air-transmission time is defined by the generation or transmission time, determined by said timer component, of said data packet at said central node plus said time deferral.

19. Device according to anyone of claims 16 to 18, wherein said interface for receiving indications comprises a dedicated port for receiving said indications.

20. Device according to claim 15 or 16, wherein the controller is adapted for restarting following said increasing of said time deferral.

21. Device according to anyone of claims 16 to 20, further comprising:
- an output buffer for data packets to be transmitted to said at least two distributed nodes;
wherein said controller is adapted for performing said increasing or decreasing of said time deferral by simultaneously transmitting a plurality of data packets from said output buffer to said at least two distributed nodes, wherein the time deferral of each data packet is gradually increased or decreased until a target time deferral has been reached.

22. Device according to anyone of claims 16 to 21, wherein said controller is adapted for transmitting to at least one of said at least two distributed nodes a request to indicate if the time gap between the arrival time of said at least one data packet and said transmission time is equal to or above said target time gap, and for restarting if any requested distributed node does not provide said indication within a pre-determined time interval.

23. Device according to anyone of claims 16 to 22, wherein said indication includes the deviation of the time gap from said target time gap, and wherein said controller is adapted to perform said increasing or decreasing of the time deferral based on said deviation.

24. Device for synchronizing the transmission of data packets in a broadcast system comprising a central node and said device, the device comprising:
- an interface adapted for receiving data packets from said central node;
- an interface adapted for transmitting indications to said central node;
- a timer component;
- a controller adapted for receiving at least one data packet from said central node, wherein said data packet is to be transmitted by said device at a transmission time defined by a time deferral or an air-transmission time, receiving from said central node a request to indicate if the time gap between the arrival time of said at least one data packet and said transmission time is below a target time gap, determining the time gap between the arrival time of said at least one data packet and said transmission time, and transmitting an indication that the time gap is below said target time gap to said central node if the time gap of said at least one data packet is below said target time gap.

25. Device according to claim 24, wherein said interface for transmitting indications is adapted for transmitting said indications to a dedicated port of said central node.

26. Device according to claim 24 or 25, wherein said controller is adapted for receiving a request to indicate if the time gap between the arrival time of said at least one data packet and said transmission time is equal to or above said target time gap, and for transmitting an indication that time gap is equal to or above said target time gap to said central node if said time gap is equal to or above said target time gap.

27. Device according to anyone of claims 24 to 26, wherein said controller is adapted for determining the deviation of the time gap from said target time gap, and for including said deviation in said indication.

28. System, comprising a device according to anyone of claims 16 to 23, and at least two devices according to anyone of claims 24 to 27.

29. Apparatus, comprising:
- means for transmitting at least one data packet from said central node to said at least two distributed nodes, wherein said data packet is to be transmitted by said at least one distributed node at a transmission time defined by a time deferral;
- means for transmitting to said at least two distributed nodes a request to indicate if the time gap between the arrival time of at least one data packet and said transmission time is below a target time gap;
- means for decreasing said time deferral and restarting the method if no distributed node indicates within a pre-determined time interval that said time gap is below said target time gap; and
- means for increasing said time deferral if at least one distributed node indicates within said pre-determined time interval that said time gap is below said target time gap.

30. Apparatus, comprising:
- means for receiving at least one data packet from said central node, wherein said data packet is to be transmitted at a transmission time defined by a time deferral or an air-transmission time;
- means for receiving from said central node a request to indicate if the time gap between the arrival time of said at least one data packet and said transmission time is below a target time gap;
- means for determining the time gap between the arrival time of said at least one data packet and said transmission time; and
- means for transmitting an indication that the time gap is below said target time gap to said central node if the time gap of said at least one data packet is below said target time gap.
